# EUROPEAN PATENT APPLICATION

(11) **EP 4 414 967 A1**
(43) Date of publication of application: **14.08.2024**
(21) Application number: 24151994.1
(22) Date of filing: 16.01.2024
(51) Int. Cl.: G08G 5/00, G01C 23/00, G08G 5/04

(54) **SYSTEMS AND METHODS FOR GENERATING A MODIFIED FLIGHT PATH TO AVOID A NO TURN SITUATION**

(30) Priority: 08.02.2023 IN 202311008054; 29.03.2023 US 202318192350
(71) Applicant: Honeywell International Inc., Charlotte, NC 28202 (US)
(72) Inventor: BAZAWADA, Suresh, Charlotte, 28202 (US); SONGA, Anil Kumar, Charlotte, 28202 (US); NARESH, Bojanapu, Charlotte, 28202 (US)
(74) Representative: LKGlobal UK Ltd.

(57) **Abstract**

Systems and methods are provided for generating a modified flight to avoid a no turn situation. A current flight path of an aircraft is received from a source of current flight path of the aircraft. Current aircraft location data is received from at least one geospatial sensor of the aircraft. Terrain data is retrieved from an onboard database based on the current aircraft location data. The terrain data includes a first terrain obstacle and a second terrain obstacle. A determination is made regarding whether the current flight path of the aircraft leads to a no turn situation with respect to the first terrain obstacle and the second terrain obstacle. A first notification associated with implementation of a modified flight path in accordance with a viable turn with respect to the first terrain obstacle and the second terrain obstacle is displayed on an onboard display device based on the determination.

## Description

### CROSS-REFERENCE TO RELATED APPLICATION

This application claims priority to India Provisional Patent Application No. 202311008054, filed February 8, 2023, the entire content of which is incorporated by reference herein.

### TECHNICAL FIELD

The present invention generally relates to aircraft operations and more particularly relates to systems and methods for generating a modified flight path to enable a pilot of an aircraft to avoid a no turn situation.

### BACKGROUND

In some instances, an aircraft may encounter terrain obstacles close to an airport during a landing flight phase and a take-off flight phase. Examples of terrain obstacles include geographic terrain obstacles and urban terrain obstacles. An example of a geographic terrain obstacle is mountainous areas. The geographic terrain in mountainous areas can include varying altitudes. Mountain valleys can be wide with gentle sweeping turns or very narrow with abrupt changes in direction or dead ends commonly referred to as box canyons or blind canyons while mountain ridge heights can often exceed 10,000 feet with slopes that approximate near vertical cliffs. A flight path through mountainous terrain often involves following the contours of the peaks of the geographic terrain obstacles. As a result, in mountainous terrain, a momentary loss of situational awareness may result in a navigation error potentially leading to an adverse aircraft event. Urban terrain obstacles include tall buildings in urban areas close to the airport. In some instances, the aircraft may encounter mobile obstacles, such as for example other aircraft, close to the airport.

Aircraft performance typically decreases with an increase in density altitude. Higher density altitudes may result in longer take off distances, degraded climb rates, and impact a turn radius of an aircraft. Density altitude is often a factor in loss of aircraft control and controlled flights into terrain (CFIT). The turn radius of an aircraft at a given indicated airspeed (IAS) and/or bank angle typically increase at higher altitudes. Other factors that may impact aircraft performance include, but are not limited to, winds, weather, mountain aerodromes, and ambient lighting.

Following a current flight path into an area with terrain obstacles and/or mobile obstacles while encountering one or more factors that may adversely impact aircraft performance could potentially lead an aircraft into a no turn situation. A no turn situation occurs when the aircraft is unable to implement a viable turn within a radius that enables the aircraft to avoid a collision with a terrain obstacle. Hence there is a need for systems and methods for generating a modified flight path that enables a pilot of the aircraft to avoid a no turn situation.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

An exemplary embodiment of a system includes at least one geospatial sensor of an aircraft; an onboard database configured to store terrain data; an onboard display device; a source of current flight path of the aircraft; and a controller configured to: receive a current flight path of the aircraft from the source of current flight path of the aircraft, receive current aircraft location data from the at least one geospatial sensor, retrieve terrain data from the onboard database based on the current aircraft location data, the terrain data including a first terrain obstacle and a second terrain obstacle, determine whether the current flight path of the aircraft leads to a no turn situation with respect to the first terrain obstacle and the second terrain obstacle, and display a first notification associated with implementation of a modified flight path in accordance with a viable turn with respect to the first terrain obstacle and the second terrain obstacle on the onboard display device based on the determination.

An exemplary embodiment of a method includes receiving a current flight path of an aircraft from a source of current flight path of the aircraft; receiving current aircraft location data from at least one geospatial sensor of the aircraft; retrieving terrain data from an onboard database based on the current aircraft location data, the terrain data including a first terrain obstacle and a second terrain obstacle; determining whether the current flight path of the aircraft leads to a no turn situation with respect to the first terrain obstacle and the second terrain obstacle, and displaying a first notification associated with implementation of a modified flight path in accordance with a viable turn with respect to the first terrain obstacle and the second terrain obstacle on an onboard display device based on the determination.

Furthermore, other desirable features and characteristics of the system and method for generating a modified flight path to avoid a no turn situation will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 is a block diagram representation of a system configured to implement avoidance of a no turn situation in accordance with an exemplary embodiment;
FIG. 2 is a block diagram representation of an aircraft including an exemplary embodiment of a no turn situation avoidance system;
FIG. 3 is an exemplary illustration of a no deviation area display of an aircraft on a current flight path prior to entry into a no deviation area defined by geographical terrain obstacles in accordance with an embodiment;
FIG. 4 is an exemplary illustration of a no deviation area display of an aircraft on a current flight path prior to entry into a no deviation area defined by urban terrain obstacles in accordance with an embodiment;
FIG. 5 is an exemplary illustration of a no turn situation warning display prior to entry of the aircraft into a no turn situation in accordance with an embodiment;
FIG. 6 is an exemplary illustration of a no turn situation warning display prior to entry of the aircraft into a no turn situation in accordance with an embodiment;
FIG. 7 is an exemplary illustration of a modified flight path display in accordance with an embodiment; and
FIG. 8 is a flowchart representation of an exemplary embodiment of a method of generating a modified flight path to avoid a no turn situation is shown.

### DETAILED DESCRIPTION

The following detailed description is merely exemplary in nature. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

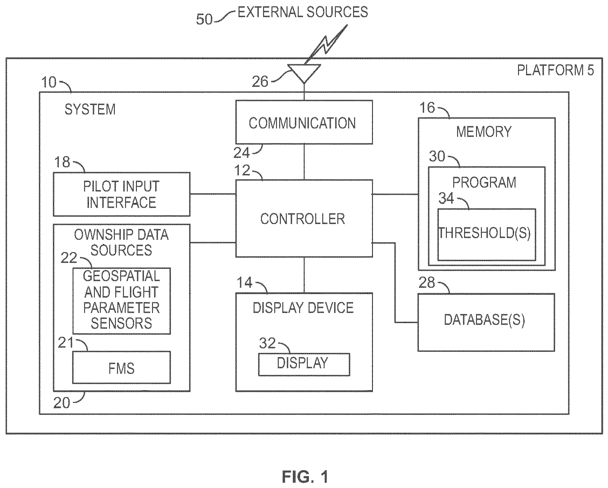

FIG. 1 is a block diagram representation of a system 10 configured to implement avoidance of a no turn situation in accordance with an embodiment (shortened herein to "system" 10), as illustrated in accordance with an exemplary and non-limiting embodiment of the present disclosure. The system 10 may be utilized onboard a mobile platform 5, as described herein. In various embodiments, the mobile platform is an aircraft, which carries or is equipped with the system 10. As schematically depicted in FIG. 1, the system 10 includes the following components or subsystems, each of which may assume the form of a single device or multiple interconnected devices: a controller circuit 12 operationally coupled to: at least one display device 14; computer-readable storage media or memory 16; an optional input interface 18, and ownship data sources 20 including, for example, a flight management system (FMS) 21 and an array of flight system state and geospatial sensors 22.

In various embodiments, the system 10 may be separate from or integrated within: the flight management system (FMS) 21 and/or a flight control system (FCS). Although schematically illustrated in FIG. 1 as a single unit, the individual elements and components of the system 10 can be implemented in a distributed manner utilizing any practical number of physically distinct and operatively interconnected pieces of hardware or equipment. When the system 10 is utilized as described herein, the various components of the system 10 will typically all be located onboard the mobile platform 5.

The term "controller circuit" (and its simplification, "controller"), broadly encompasses those components utilized to carry-out or otherwise support the processing functionalities of the system 10. Accordingly, the controller circuit 12 can encompass or may be associated with a programmable logic array, application specific integrated circuit or other similar firmware, as well as any number of individual processors, flight control computers, navigational equipment pieces, computer-readable memories (including or in addition to the memory 16), power supplies, storage devices, interface cards, and other standardized components. In various embodiments, the controller circuit 12 embodies one or more processors operationally coupled to data storage having stored therein at least one firmware or software program (generally, computer-readable instructions that embody an algorithm) for carrying-out the various process tasks, calculations, and control/display functions described herein. During operation, the controller circuit 12 may be programmed with and execute the at least one firmware or software program, for example, a program 30, that embodies an algorithm described herein for generating a modified flight path to avoid a no turn situation in accordance with an embodiment on a mobile platform 5, where the mobile platform 5 is an aircraft, and to accordingly perform the various process steps, tasks, calculations, and control/display functions described herein.

The controller circuit 12 may exchange data, including real-time wireless data, with one or more external sources 50 to support operation of the system 10 in embodiments. In this case, bidirectional wireless data exchange may occur over a communications network, such as a public or private network implemented in accordance with Transmission Control Protocol/Internet Protocol architectures or other conventional protocol standards. Encryption and mutual authentication techniques may be applied, as appropriate, to ensure data security.

The memory 16 is a data storage that can encompass any number and type of storage media suitable for storing computer-readable code or instructions, such as the aforementioned software program 30, as well as other data generally supporting the operation of the system 10. The memory 16 may also store one or more threshold 34 values, for use by an algorithm embodied in software program 30. One or more database(s) 28 are another form of storage media; they may be integrated with memory 16 or separate from it.

In various embodiments, aircraft-specific parameters and information for an aircraft may be stored in the memory 16 or in a database 28 and referenced by the program 30. Non-limiting examples of aircraft-specific information includes an aircraft weight and dimensions, performance capabilities, configuration options, and the like.

Flight parameter sensors and geospatial sensors 22 supply various types of data or measurements to the controller circuit 12 during an aircraft flight. In various embodiments, the geospatial sensors 22 supply, without limitation, one or more of: inertial reference system measurements providing a location, Flight Path Angle (FPA) measurements, airspeed data, groundspeed data (including groundspeed direction), vertical speed data, vertical acceleration data, altitude data, attitude data including pitch data and roll measurements, yaw data, heading information, sensed atmospheric conditions data (including wind speed and direction data), flight path data, flight track data, radar altitude data, and geometric altitude data.

With continued reference to FIG. 1, the display device 14 can include any number and type of image generating devices on which one or more avionic displays 32 may be produced. When the system 10 is utilized for a manned aircraft, the display device 14 may be affixed to the static structure of the Aircraft cockpit as, for example, a Head Down Display (HDD) or Head Up Display (HUD) unit. In various embodiments, the display device 14 may assume the form of a movable display device (e.g., a pilot-worn display device) or a portable display device, such as an Electronic Flight Bag (EFB), a laptop, or a tablet computer carried into the aircraft cockpit by a pilot.

At least one avionic display 32 is generated on the display device 14 during operation of the system 10; the term "avionic display" is synonymous with the term "aircraft-related display" and "cockpit display" and encompasses displays generated in textual, graphical, cartographical, and other formats. The system 10 can generate various types of lateral and vertical avionic displays 32 on which map views and symbology, text annunciations, and other graphics pertaining to flight planning are presented for a pilot to view. The display device 14 is configured to continuously render at least a lateral display showing the aircraft at its current location within the map data. The avionic display 32 generated and controlled by the system 10 can include graphical user interface (GUI) objects and alphanumerical input displays of the type commonly presented on the screens of multifunction control display units (MCDUs), as well as Control Display Units (CDUs) generally. Specifically, embodiments of the avionic displays 32 include one or more two-dimensional (2D) avionic displays, such as a horizontal (i.e., lateral) navigation display or vertical navigation display (i.e., vertical situation display VSD); and/or on one or more three dimensional (3D) avionic displays, such as a Primary Flight Display (PFD) or an exocentric 3D avionic display.

In various embodiments, a human-machine interface is implemented as an integration of a pilot input interface 18 and a display device 14. In various embodiments, the display device 14 is a touch screen display. In various embodiments, the human-machine interface also includes a separate pilot input interface 18 (such as a keyboard, cursor control device, voice input device, or the like), generally operationally coupled to the display device 14. Via various display and graphics systems processes, the controller circuit 12 may command and control a touch screen display device 14 to generate a variety of graphical user interface (GUI) objects or elements described herein, including, for example, buttons, sliders, and the like, which are used to prompt a user to interact with the human-machine interface to provide user input; and for the controller circuit 12 to activate respective functions and provide user feedback, responsive to received user input at the GUI element.

In various embodiments, the system 10 may also include a dedicated communications circuit 24 configured to provide a real-time bidirectional wired and/or wireless data exchange for the controller 12 to communicate with the external sources 50 (including, each of: traffic, air traffic control (ATC), satellite weather sources, ground stations, and the like). In various embodiments, the communications circuit 24 may include a public or private network implemented in accordance with Transmission Control Protocol/Internet Protocol architectures and/or other conventional protocol standards. Encryption and mutual authentication techniques may be applied, as appropriate, to ensure data security. In some embodiments, the communications circuit 24 is integrated within the controller circuit 12, and in other embodiments, the communications circuit 24 is external to the controller circuit 12. When the external source 50 is "traffic," the communications circuit 24 may incorporate software and/or hardware for communication protocols as needed for traffic collision avoidance (TCAS), automatic dependent surveillance broadcast (ADSB), and enhanced vision systems (EVS).

In certain embodiments of the system 10, the controller circuit 12 and the other components of the system 10 may be integrated within or cooperate with any number and type of systems commonly deployed onboard an aircraft including, for example, an FMS 21.

The disclosed algorithm is embodied in a hardware program or software program (e.g. program 30 in controller circuit 12) and configured to operate when the aircraft is in any phase of flight. The algorithm enables the generation of a modified flight path to avoid a no turn situation in accordance with an embodiment. In an embodiment, the system 10 includes a traffic collision avoidance system (TCAS). In an embodiment, the system 10 includes an automatic dependent surveillance broadcast (ADS-B) system.

In various embodiments, the provided controller circuit 12, and therefore its program 30 may incorporate the programming instructions for: receiving a current flight path of an aircraft from a source of current flight path of the aircraft; receiving current aircraft location data from at least one geospatial sensor of the aircraft; retrieving terrain data from an onboard database based on the current aircraft location data, the terrain data including a first terrain obstacle and a second terrain obstacle; determining whether the current flight path of the aircraft leads to a no turn situation with respect to the first terrain obstacle and the second terrain obstacle, and displaying a first notification associated with implementation of a modified flight path in accordance with a viable turn with respect to the first terrain obstacle and the second terrain obstacle on an onboard display device based on the determination. An example of the source of current flight path of the aircraft is a flight management system (FMS).

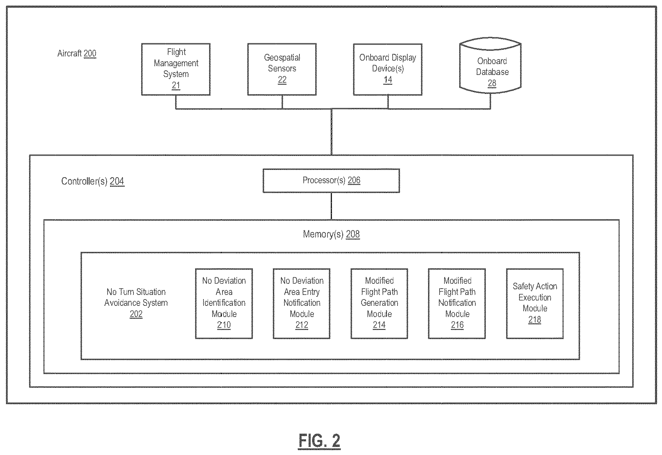

Referring to FIG. 2, a block diagram representation of an aircraft 200 including an exemplary embodiment of a no turn situation avoidance system 202 is shown. In an embodiment, the configuration of the aircraft 200 is similar to the configuration of the platform 5 described with reference to FIG. 1. The aircraft 200 includes at least one controller 204. The controller 204 includes at least one processor 206 and at least one memory 208. The memory 208 includes an embodiment of the no turn situation avoidance system 202.

In an embodiment, the aircraft 200 includes one or more onboard display devices 14, a flight management system (FMS) 21, geospatial sensors 22, and an onboard database 28. The onboard database 28 is configured to store terrain data associated with a flight plan of the aircraft 200. The terrain data includes terrain obstacles. In an embodiment, the terrain data includes geographical terrain obstacles. In an embodiment, the terrain data includes urban terrain obstacles. In an embodiment, the terrain data includes geographical terrain obstacles and urban terrain obstacles.

The controller 204 is configured to be communicatively coupled to the onboard display device(s) 14, the flight management system (FMS) 21, the geospatial sensors 22, and the onboard database 28. In an embodiment, the no turn situation avoidance system 202 includes a no deviation area identification module 210, a no deviation area entry notification module 212, a modified flight path generation module 214, a modified flight path notification module 216, and a safety action execution module 218. In an embodiment, the aircraft 200 includes a TCAS. In an embodiment, the aircraft 200 includes an ADS-B system configured to receive surrounding aircraft data. The no turn situation avoidance system 202 may include additional components that facilitate operation of the no turn situation avoidance system 202.

The no deviation area identification module 210 is configured to receive a current flight path of the aircraft 200 from the FMS 21 and current aircraft location data from the geospatial sensors 22. The no deviation area identification module 210 is configured to retrieve terrain data based on the current aircraft location data from the onboard database 28. The retrieved terrain data includes terrain obstacles. In an embodiment, the terrain data includes geographical terrain obstacles. An example of a geographical terrain obstacle is mountains in a mountainous area. In an embodiment, the terrain data includes urban terrain obstacles. An example of an urban terrain obstacle is buildings in an urban area. In an embodiment, the terrain data includes geographical terrain obstacles and urban terrain obstacles.

The no deviation area identification module 210 identifies the terrain obstacles in the current flight path of the aircraft 200. In an embodiment, the no deviation area identification module 210 identifies the terrain obstacles in a current flight path of the aircraft 200 during a take-off flight phase. In an embodiment, the no deviation area identification module 210 identifies the terrain obstacles in a current flight path of the aircraft 200 during a landing flight phase.

The no deviation area identification module 210 determines whether the location of the identified terrain obstacles defines a no deviation area with respect to the current flight path of the aircraft 200. The aircraft 200 typically has a minimum aircraft specific turn radius. When the aircraft 200 maintains the current flight path into the no deviation area, the location of the identified terrain obstacles in the no deviation area creates a no turn situation when the aircraft 200 is unable to implement a viable turn that enables the aircraft 200 to avoid a collision with a terrain obstacle in the no deviation area. In other words, the minimum aircraft specific turn radius is not sufficient for the aircraft 200 to avoid a collision with a terrain obstacle in the no deviation area.

In an embodiment, the no deviation area identification module 210 determines whether the current flight path enables the aircraft 200 to implement a viable 180° turn between the terrain obstacles based on the aircraft specific turn radius of the aircraft 200. If the no deviation area identification module 210 determines that the current flight path does not enable the aircraft 200 to implement a viable 180° turn between the terrain obstacles based on the aircraft specific turn radius of the aircraft 200, the no deviation area identification module 210 makes an assessment that the current flight path of the aircraft 200 leads to a no turn situation.

Aircraft performance typically decreases with an increase in density altitude. Higher density altitudes may result in longer take off distances, degraded climb rates, and can increase the aircraft specific turn radius of the aircraft 200. The aircraft specific turn radius of the aircraft 200 at a given indicated airspeed (IAS) and/or bank angle typically increase at higher altitudes. Other factors that may impact aircraft performance include, but are not limited to, winds, weather, mountain aerodromes, and ambient lighting.

When the aircraft 200 follows the current flight path into an area with terrain obstacles while encountering one or more of the factors that may adversely impact aircraft performance, an aircraft 200 that could otherwise implement a viable turn between the terrain obstacles under normal operating conditions may end up in a no turn situation due to the increase in the minimum aircraft specific turn radius. In an embodiment, the no deviation area identification module 210 determines whether one or more factors that may impact aircraft performance leads to an increase in the aircraft specific turn radius of the aircraft 200. If the no deviation area identification module 210 determines that the presence of one or more factors impacts aircraft performance and results in an increase in the aircraft specific turn radius, the no deviation area identification module 210 determines whether the location of terrain obstacles with respect to the current flight path defines a no deviation area based on the increase in the aircraft specific turn radius of the aircraft 200. If the no deviation area identification module 210 determines that the location of the terrain obstacles with respect to the current flight path defines a no deviation area based on the increased aircraft specific turn radius, the no deviation area identification module 210 determines that the aircraft 200 will encounter a no turn situation if the aircraft 200 remains on the current flight path.

In an embodiment, if the no deviation area identification module 210 determines that the aircraft 200 will encounter a no turn situation with respect to the terrain obstacles if the aircraft 200 remains on the current flight path, the deviation area entry notification module 212 is configured to generate a no deviation area display for display on an onboard display device 14. In an embodiment, if the no deviation area identification module 210 determines that the aircraft 200 will encounter a no turn situation with respect to the terrain obstacles if the aircraft remains on the current flight path, the deviation area entry notification module 212 is configured to generate a no turn situation warning display for display on an onboard display device 14. In an embodiment, if the no deviation area identification module 210 determines that the aircraft 200 will encounter a no turn situation with respect to the terrain obstacles if the aircraft remains on the current flight path, the deviation area entry notification module 212 is configured to generate a no deviation area display and a no turn situation warning display for display on the onboard display devices 14.

In an embodiment, the deviation area entry notification module 212 is configured to generate the no deviation area display as a lateral display. In an embodiment, the deviation area entry notification module 212 is configured to generate the no deviation area display as a vertical situation display. In an embodiment, the deviation area entry notification module 212 is configured to generate the no turn situation warning display as a lateral display. In an embodiment, the deviation area entry notification module 212 is configured to generate the no turn situation warning display as a vertical situation display.

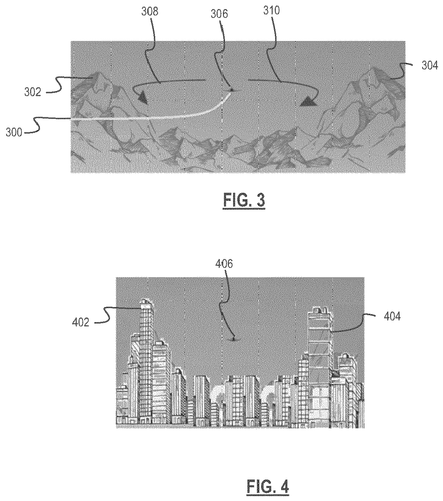

Referring to FIG. 3, an exemplary illustration of a no deviation area display of an aircraft 200 on a current flight path 300 prior to entry into the no deviation area defined by geographical terrain obstacles 302, 304 in accordance with an embodiment is shown. In the example, the no deviation area identification module 210 received the current flight path 300 of the aircraft 200 from the FMS 21 and the current aircraft location data 306 of the aircraft 200 from the geospatial sensors 22. The no deviation area identification module 210 retrieved terrain data from the onboard database 28 based on the current aircraft location data 306. The terrain data includes two terrain obstacles 302, 304 in close proximity to the current flight path 300 of the aircraft 200. In the example, the terrain obstacles 302, 304 are geographic terrain obstacles 302, 304. The geographic terrain obstacles 302, 304 are a first mountain 302 and a second mountain 304.

The no deviation area identification module 210 determined that the locations of the first mountain 302 and the second mountain 304 with respect to the current flight path 300 of the aircraft 200 defined a no deviation area. In the example, the no deviation area identification module 210 determined that if the aircraft 200 remained on the current flight path 300, the aircraft 200 would be unable to implement a viable 180° turn between the first mountain 302 and the second mountain 304 based on the aircraft specific turn radius of the aircraft 200. The no deviation area identification module 210 determined that if the aircraft 200 remains on the current flight path 300, the aircraft specific turn radius of the aircraft 200 will be too high to enable the aircraft 200 to implement a first turn 308 to avoid the first mountain 302 or to implement a second turn 310 to avoid the second mountain 304. The deviation area entry notification module 212 generated the example no deviation area display associated with the no turn situation between the first mountain 302 and the second mountain 304 for display on an onboard display device 14.

Referring to FIG. 4, an exemplary illustration of a no deviation area display of an aircraft 200 on a current flight path prior to entry into the no deviation area defined by urban terrain obstacles 402, 404 in accordance with an embodiment is shown. In the example, the no deviation area identification module 210 received the current flight path of the aircraft 200 from the FMS 21 and the aircraft location data 406 from the geospatial sensors 22. The no deviation area identification module 210 retrieved terrain data from the onboard database 28 based on the current aircraft location data 406. The terrain data includes two terrain obstacles 402, 404 in close proximity to the current flight path of the aircraft 200. In the example, the terrain obstacles 402, 404 are urban terrain obstacles 402, 404. The urban terrain obstacles 402, 404 are a first building 402 and a second building 404.

The no deviation area identification module 210 determined that the location of the first building 402 and the second building 404 with respect to the current flight path of the aircraft 200 defined a no deviation area. In the example, the no deviation area identification module 210 determined that if the aircraft 200 remained on the current flight path, the aircraft would be unable to implement a viable 180° turn between the first building 404 and the second building 406 based on the aircraft specific turn radius of the aircraft 200. The no deviation area identification module 210 determined that if the aircraft 200 remained on the current flight path, the aircraft specific turn radius would be too high to enable the aircraft 200 to implement a first turn to avoid the first building 402 or implement a second turn to avoid the second building 404. The deviation area entry notification module 212 generated the example no deviation area display associated with the no turn situation between the first building 402 and the second building 404 for display on an onboard display device 14.

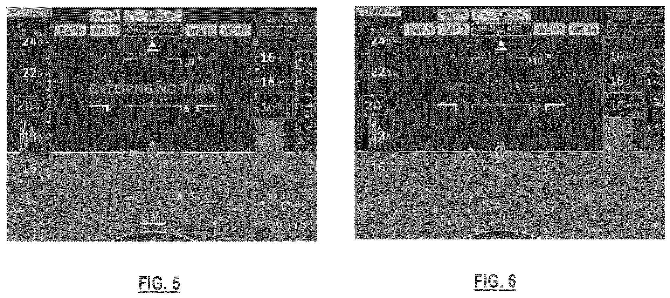

Referring to FIG. 5, an exemplary illustration of a no turn situation warning display prior to entry of an aircraft 200 into a no turn situation in accordance with an embodiment is shown. In the example, the no deviation area identification module 210 has determined that the aircraft 200 will encounter a no turn situation with respect to terrain obstacles if the aircraft 200 remains on the current flight path. The deviation area entry notification module 212 has responsively generated a no turn situation warning display for display on an onboard display device 14.

Referring to FIG. 6, an exemplary illustration of a no turn situation warning display prior to entry of an aircraft 200 into a no turn situation in accordance with an embodiment is shown. In the example, the no deviation area identification module 210 has determined that the aircraft 200 will encounter a no turn situation with respect to terrain obstacles if the aircraft 200 remains on the current flight path. The deviation area entry notification module 212 has responsively generated a no turn situation warning display for display on an onboard display device 14.

Referring back to FIG 2, if the no deviation area identification module 210 determines that if the aircraft 200 remains on the current flight path, the aircraft 200 will encounter a no turn situation with respect to the terrain obstacles, the modified flight path generation module 214 is configured to generate a modified flight path that will enable the aircraft 200 to implement a viable turn between the terrain obstacles. In an embodiment, the modified flight path generation module 214 is configured to generate a modified flight path that includes a viable 180° turn between the terrain obstacles based on the aircraft specific turn radius of the aircraft 200.

Factors, such as for example, density altitude, indicated airspeed (IAS), a bank angle, winds, weather, mountain aerodromes and ambient light can lead to an increase in the aircraft specific turn radius of the aircraft 200. In an embodiment, the modified flight path generation module 214 is configured to determine an increase in the aircraft specific turn radius of the aircraft 200 based the one or more factors and generate a modified aircraft specific turn radius. The modified flight path generation module 214 is configured to determine a viable 180° turn between the terrain obstacles based on the modified aircraft specific turn radius of the aircraft 200. The modified flight path generation module 214 is configured generate the modified flight path including the viable 180° turn between the terrain obstacles based on the modified aircraft specific turn radius of the aircraft 200.

While a viable turn has been described a 180° turn between the terrain obstacles, in alternative embodiments, the modified flight path generation module 214 may be configured to generate viable turns to avoid the terrain obstacles using viable turns having different degree values. For example, in an embodiment, the modified flight path generation module 214 is configured to determine whether the current flight path enables the aircraft 200 to implement a viable turn with respect to the terrain obstacles. If the modified flight path generation module 214 determines that the current flight path does not enable the aircraft 200 to implement a viable turn with respect to the terrain obstacles, the modified flight path generation module 214 is configured to identify a turn degree associated with implementation of a viable turn with respect to the terrain obstacles. The modified flight path generation module 214 is configured to generate a modified flight path including the viable turn in accordance with the identified turn degree.

Once the modified flight generation path module 214 has generated the modified flight path in accordance with a viable turn with respect to the terrain obstacles, the modified flight path notification module 216 is configured to generate a modified flight path display for display on an onboard display device 14. The modified flight path notification module 216 is configured to generate the modified flight path display for display on the onboard display device 14 prior to entry of the aircraft 200 into the no deviation area associated with the no turn situation. In an embodiment, the modified flight path display illustrates the modified flight path with respect to the terrain obstacles. In an embodiment, the modified flight generation path module 214 is configured to generate the modified flight path display as a lateral display. In an embodiment, the modified flight generation path module 214 is configured to generate the modified flight path display as a vertical situation display.

In an embodiment, the modified flight path notification module 216 is configured to generate a modified flight path display including a selectable option to implement the modified flight path including the viable turn for display on the onboard display device 14. The selection of the option by a pilot would initiate implementation of the modified flight path including the viable turn with respect to the terrain obstacles.

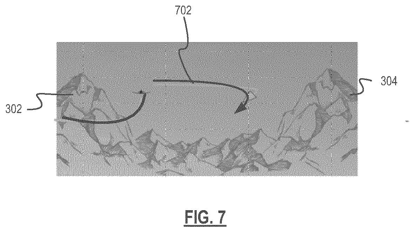

Referring to FIG. 7, an exemplary illustration of a modified flight path display in accordance with an embodiment is shown. The modified flight path display includes a modified flight path 702 including a viable 180° turn is with respect to the first geographic obstacle 302 and the second geographic obstacle 304 referenced in FIG. 3. The modified flight path generation module 214 determined a viable 180° turn between the first geographic obstacle 302 and the second geographic obstacle 304 based on an aircraft specific turn radius of the aircraft 200. The modified flight generation module 214 generated the modified flight path 702 in accordance with the viable 180° turn. The modified flight path notification module 216 generated the modified flight path display including the modified flight path 702 with respect to the first geographic obstacle 302 and the second geographic obstacles 304 for display on an onboard display device 14. The modified flight path notification module 216 generated the modified flight path display for display on the onboard display device 14 prior to entry of the aircraft 200 into the no deviation area associated with the no turn situation.

Referring back to FIG. 2, the safety action execution module 218 is configured to determine whether the modified flight path including the viable turn with respect to the terrain obstacles has been initiated. In an embodiment, the safety action execution module 218 is configured to determine whether the modified flight path including the viable turn has been implemented within a first pre-defined period of time following entry of the aircraft 200 into the no deviation area. If the safety action execution module 218 determines that the modified flight path has not been implemented within the first pre-defined period of time, the safety action execution module 218 is configured to automatically implement the modified flight path including the viable turn.

In an embodiment, the modified flight path notification module 216 is configured to generate a modified flight path display including a selectable option to implement the modified flight path including the viable turn for display on the onboard display device 14. The safety action execution module 218 is configured to determine whether the selectable option has been selected by a pilot within a second pre-defined period of time upon entry of the aircraft 200 into the no deviation area. If the safety action execution module 218 determines that the selectable option has not been selected within the second pre-defined period of time, the safety action execution module 218 is configured to automatically implement the modified flight path including the viable turn.

In an embodiment, the safety action execution module 218 is configured to determine whether the modified flight path including the viable turn has been implemented within a third pre-defined period of time following entry of the aircraft 200 into the no deviation area. If the safety action execution module 218 determines that the modified flight path has not been implemented within the third pre-defined period of time, the safety action execution module 218 is configured to display a collision alert on an onboard display device 14. In an embodiment, the safety action execution module 218 is configured to issue an aural alert associated with the aircraft 200 encountering a no turn zone ahead.

In an embodiment, the no turn situation avoidance system 202 is configured to receive mobile obstacle data associated with two or more mobile obstacles. The no turn situation avoidance system 202 is configured to determine whether a current flight path of the aircraft 200 leads to a no turn situation with respect to the two of more mobile obstacles. If the no turn situation avoidance system 202 is determines that the current flight path of the aircraft 200 leads to a no turn situation with respect to the two of more mobile obstacles, the no turn situation avoidance system 202 is configured to generate a modified flight path in accordance with a viable turn with respect to the two of more mobile obstacles. The no turn situation avoidance system 202 is configured to generate a modified flight path display including the modified flight path in accordance with the viable turn for display on an onboard display device 14.

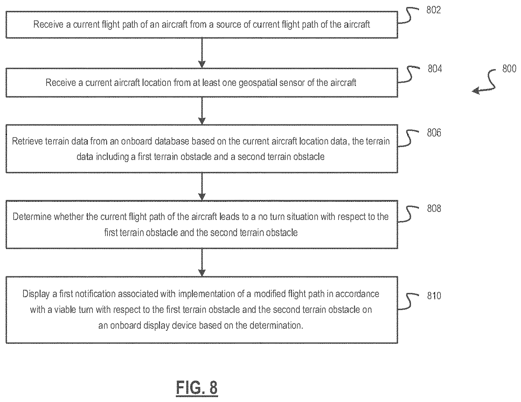

Referring to FIG. 8, a flowchart representation of an exemplary embodiment of a method 800 of generating a modified flight path to avoid a no turn situation is shown. The method 800 is implemented by an embodiment of the no turn situation avoidance system 202. At 802, a current flight path of an aircraft 200 is received from a source of current flight path of the aircraft. At 804, current aircraft location data is received from at least one geospatial sensor 22 of the aircraft 200. At 806, terrain data is retrieved from an onboard database 28 based on the current aircraft location data. The terrain data includes a first terrain obstacle and a second terrain obstacle. At 808, a determination is made regarding whether the current flight path of the aircraft 200 leads to a no turn situation with respect to the first terrain obstacle and the second terrain obstacle. At 810, a first notification associated with implementation of a modified flight path in accordance with a viable turn with respect to the first terrain obstacle and the second terrain obstacle is displayed on an onboard display device 14 based on the determination.

A technical challenge occurs when an aircraft 200 encounters terrain obstacles close to an airport during a landing flight phase and a take-off flight phase. Examples of terrain obstacles include geographic terrain obstacles and urban terrain obstacles. Momentary loss of situational awareness may result in navigation errors potentially leading to an adverse aircraft event.

Another technical challenge occurs when higher density altitudes impact an aircraft specific turn radius of an aircraft 200. The aircraft specific turn radius of an aircraft 200 at a given indicated airspeed (IAS) and/or bank angle typically increase at higher altitudes. Other factors that may impact a aircraft specific turn radius include, but are not limited to, winds, weather, mountain aerodromes, and ambient lighting.

Following a current flight path into an area with terrain obstacles while encountering one or more factors that may adversely impact aircraft performance may potentially lead an aircraft 200 into a no turn situation. A no turn situation occurs when the aircraft is unable to implement a viable turn within a radius that enables the aircraft to avoid a collision with a terrain obstacle. A technical solution to the technical challenges is addressed by the systems and methods for generating a modified flight path that enables a pilot of the aircraft 200 to avoid a no turn situation.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A system comprising:
at least one geospatial sensor of an aircraft;
an onboard database configured to store terrain data;
an onboard display device;
a source of current flight path of the aircraft; and
a controller communicatively coupled to the at least one geospatial sensor, the onboard database, and the onboard display device, the controller being configured to:
receive a current flight path of the aircraft from the source of current flight path of the aircraft,
receive current aircraft location data from the at least one geospatial sensor,
retrieve terrain data from the onboard database based on the current aircraft location data, the terrain data including a first terrain obstacle and a second terrain obstacle,
determine whether the current flight path of the aircraft leads to a no turn situation with respect to the first terrain obstacle and the second terrain obstacle, and
display a first notification associated with implementation of a modified flight path in accordance with a viable turn with respect to the first terrain obstacle and the second terrain obstacle on the onboard display device based on the determination.

2. The system of claim 1, wherein the controller is configured to retrieve the terrain data from the onboard database based on the aircraft location data, at least one of the first and second terrain obstacles comprising geographical terrain obstacles.

3. The system of claim 1, wherein the controller is configured to retrieve the terrain data from the onboard database based on the aircraft location data, at least one of the first and second terrain obstacles comprising urban terrain obstacles.

4. The system of claim 1, wherein the controller is configured to display the first notification associated with the implementation of the modified flight path in accordance with the viable turn with respect to the first terrain obstacle and the second terrain obstacle on the onboard display device prior to entry of the aircraft into a no deviation area associated with the no turn situation.

5. The system of claim 1, wherein the controller is configured to display a second notification on the onboard display device while the aircraft is on the current flight path and prior to entry of the aircraft into a no deviation area associated with the no turn situation, the second notification comprising a warning that the aircraft is about to enter the no deviation area associated with the no turn situation.

6. The system of claim 1, wherein the controller is configured to:
determine whether the current flight path enables the aircraft to implement a viable 180° turn between the first and second terrain obstacles based on an aircraft specific turn radius of the aircraft; and
assess whether the current flight path of the aircraft leads to a no turn situation with respect to the first terrain obstacle and the second terrain obstacle based on the determination.

7. The system of claim 1, wherein the controller is configured to display the modified flight path associated with the viable turn between the first and second terrain obstacles on the onboard display device.

8. The system of claim 1, wherein the controller is configured to display a no deviation area associated with the no turn situation between the first and second terrain obstacles on the onboard display device.

9. The system of claim 1, wherein the controller is configured to display a third notification identifying at least one no deviation area associated with the no turn situation on the current flight path on the onboard display device during at least one of a take-off flight phase and a landing flight phase.

10. The system of claim 1, wherein the controller is configured to:
determine whether the viable turn of the aircraft has been initiated in response to the first notification upon entry of the aircraft into a no deviation area between the first obstacle and the second obstacle along the current flight path; and
automatically implement the viable turn after a predefined period of time following the entry of the aircraft into the no deviation area based on the determination.

11. The system of claim 1, wherein the controller is configured to:
determine whether the viable turn of the aircraft has been initiated in response to the first notification upon entry of the aircraft into a no deviation area between the first obstacle and the second obstacle along the current flight path; and
display a potential collision alert on the onboard display device based on the determination.

12. The system of claim 1, wherein the controller is configured to:
receive mobile obstacle data including first and second mobile obstacles;
determine whether the current flight path of the aircraft leads to a no turn situation with respect to the first and second mobile obstacles; and
display a fourth notification associated with implementation of the modified flight path in accordance with the viable turn with respect to the first and second mobile obstacles on the onboard display device based on the determination.

13. The system of claim 1, wherein the controller is configured to:
determine whether the current flight path enables the aircraft to implement the viable turn between the first and second terrain obstacles; and
identify a turn degree associated with implementation of the viable turn based on the determination.

14. The system of claim 1, wherein the controller is configured to display a fifth notification identifying at least one no deviation area associated with the no turn situation on the current flight path on the onboard display device associated with a flight phase of the aircraft.

15. A method comprising:
receiving a current flight path of an aircraft from a source of current flight path of the aircraft;
receiving current aircraft location data from at least one geospatial sensor of the aircraft;
retrieving terrain data from an onboard database based on the current aircraft location data, the terrain data including a first terrain obstacle and a second terrain obstacle;
determining whether the current flight path of the aircraft leads to a no turn situation with respect to the first terrain obstacle and the second terrain obstacle; and
displaying a first notification associated with implementation of a modified flight path in accordance with a viable turn with respect to the first terrain obstacle and the second terrain obstacle on an onboard display device based on the determination.
